Europäisches Patentamt

European Patent Office

Office européen des brevets

(19)

(11) Veröffentlichungsnummer: **0 178 621**
**A2**

(12) # EUROPÄISCHE PATENTANMELDUNG

(21) Anmeldenummer: **85113022.9**

(22) Anmeldetag: **14.10.85**

(51) Int. Cl.4: **H 01 S 3/097**
**H 01 S 3/03**

(30) Priorität: **15.10.84 DE 3437738**

(43) Veröffentlichungstag der Anmeldung:
**23.04.86 Patentblatt 86/17**

(84) Benannte Vertragsstaaten:
**BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Brumme, Gerhard, Dr. rer. nat. Dipl.-Phys.**
**Am Lochfeld 25**
**D-8088 Eching a.A.(DE)**

(72) Erfinder: **Paur, Konrad, Dipl.-Ing.**
**Putzbrunner Strasse 41a**
**D-8012 Ottobrunn(DE)**

(54) **Transversal angeregter Gaslaser und Verfahren zu seinem Betrieb.**

(57) Gegenstand des Hauptpatents ist ein transversal angeregter Gaslaser, dessen Hauptentladung durch eine zwischen Hilfselektroden gezündete Koronaentladung eingeleitet wird. Die Hilfselektroden bestehen dabei jeweils aus einem Leiter, der von einem Dielektrikum umhüllt wird; die Hüllen eines Elektrodenpaares können dabei auch zu einem einzigen Teil zusammengefaßt sein. Die Erfindung geht von dieser Hüllenform aus und schlägt vor, den Mantel zwischen den beiden Leitern auf seiner der Hauptentladungsstrecke zugewandten Seite (Innenseite) mit einem längsachsenparallelen Einschnitt zu versehen und auf seiner Außenseite auch noch zu metallisieren. Der Einschnitt sorgt dafür, daß das UV-Licht der Korona-Entladung bevorzugt in den Bereich der Hauptentladungsstrecke gelangt und somit vor allem dort freie Elektronen erzeugt, wo sie am wirksamsten sind. Die Außenmetallisierung erhöht die Kapazität der Hilfselektrodenanordnung; dadurch wird die Koronaentladung verstärkt und möglicherweise auch die Hauptentladung derart verzögert, daß der Durchbruch in einem stärker ionisierten Gas erfolgt. Im Ergebnis wird der Laser unabhängiger von Änderungen in der Hochspannung, dem Gasdruck und der Gaszusammensetzung.

Hauptanwendungsgebiet: sealed-off-$CO_2$-Laser für den mobilen Einsatz.

FIG 1

EP 0 178 621 A2

Siemens Aktiengesellschaft          Unser Zeichen

Berlin und München                  VPA  84 P 1864 E

Transversal angeregter Gaslaser und Verfahren zu seinem Betrieb.

Zusatz zu Patent          (Patentanmeldung P 33 13 811.7).

Die Erfindung betrifft einen Gaslaser gemäß dem Oberbegriff des Anspruchs 1. Ein derartiger TE-Laser gehört zum Gegenstand der älteren, noch nicht veröffentlichten Patentanmeldung P 33 13 811.7.

Bei dem Lasertyp der zitierten Anmeldung wird die Hauptladung durch eine zwischen Hilfsentladungen erzeugte, freie Koronaentladung vorbereitet. Die Hilfselektroden bestehen jeweils aus einem von einem Dielektrikum umhüllten Leiter, wobei die Hüllen mehrerer Leiter auch zu einem gemeinsamen Träger zusammengefaßt sein können. Ein solches Elektrodensystem läßt sich rationell herstellen und montieren, ist relativ unabhängig von der Konfiguration der Hauptelektroden und bietet nicht zuletzt auch die Möglichkeit, die Hochspannung, den Gasdruck und die Gaszusammensetzung in gewissen Grenzen zu variieren. Damit wird ein "sealed-off"-Betrieb möglich, bei dem sich bekanntlich im Laufe der Zeit die Partialdrücke des Gasgemisches und demzufolge auch die erforderliche Hochspannung verändern.

Um die Toleranz gegenüber Parameterschwankungen und damit auch die Lebenserwartung im sealed-off-Betrieb noch weiter zu erhöhen, könnte man daran denken, parallel zur Hauptentladungsstrecke einen sogenannten "peaking capacitor" zu schalten. Dieser Kondensator kann, wenn er richtig dimensioniert ist, in vielen Fällen die Stabilität und Homogenität der Hauptentladung erheblich verbessern (vgl. hierzu Opt.Quant.Elec.15 (1981) 251). Bei der vorliegenden Laseranordnung bringt die Verwendung eines Les 1 Lk/11.10.1984

"peaking capacitors" allerdings, wie Versuche gezeigt haben, keinerlei Verbesserungen. Die Gründe für dieses Verhalten, von dem auch in Opt.Quant.Elec.15 (1983)185 berichtet wird, sind noch nicht klar.

Der Erfindung liegt die Aufgabe zugrunde, einen Laser der eingangs genannten Art so auszubilden, daß er über längere Zeiten hinweg mit einem abgeschlossenen Gasvolumen betrieben werden kann und insbesondere auch relativ starke Hochspannungsschwankungen verträgt. Diese Aufgabe wird erfindungsgemäß durch einen Laser mit den Merkmalen des Patentanspruchs 1 gelöst.

Die vorgeschlagene Einschnürung im Hilfselektrodenmantel gibt der Koronaentladung eine Form, bei der das UV-Licht bevorzugt in den Raum zwischen den Hauptelektroden abgestrahlt wird. Auf diese Weise ist der Ionisierungsgrad das Gases gerade dort, wo die Anwesenheit freier Elektronen am wirksamsten ist, besonders hoch. Es hat sich herausgestellt, daß bereits diese einfache Maßnahme die Funktionsfähigkeit des Lasers signifikant verbessert.

Noch günstiger werden die Verhältnisse, wenn man zusätzlich die Kapazität der Hilfselektrodenanordnung richtig einstellt. Der optimale Wert ist in der Regel etwas größer als diejenige Kapazität, die von den dielektrisch umhüllten Leitern selbst gebildet wird. Dementsprechend wird man normalerweise den dielektrischen Mantel auch noch auf seiner Außenseite metallisieren, und zwar an Stellen, an denen die Metallisierung nur kapazitätserhöhend wirkt und nicht in eine Entladung einbezogen wird.

Bei optimierten Hilfselektrodenkapazitäten toleriert beispielsweise ein $CO_2$-Laser ohne weiteres Hochspannungsänderungen von bis zu ±15%. Eine befriedigende Erklärung für dieses bemerkenswerte Phänomen gibt es noch nicht. Man kann wohl nicht ausschließen, daß ähnliche Mechanismen wie bei dem sonst verwendeten "peaking capacitor" eine Rolle spielen; allerdings liegen die jeweils
günstigsten Kapazitätswerte in beiden Fällen gewöhnlich
um mehr als eine Größenordnung auseinander.

Weitere vorteilhafte Ausgestaltungen und Weiterbildungen
der Erfindung sind Gegenstand zusätzlicher Ansprüche.

Der Lösungsvorschlag soll nun in Verbindung mit den beigefügten Figuren näher erläutert werden. Es zeigen
Fig. 1 ein bevorzugtes Ausführungsbeispiel, in einem
       schematisch gehaltenen Querschnitt, und
Fig. 2 von diesem Beispiel die Betriebsschaltung.

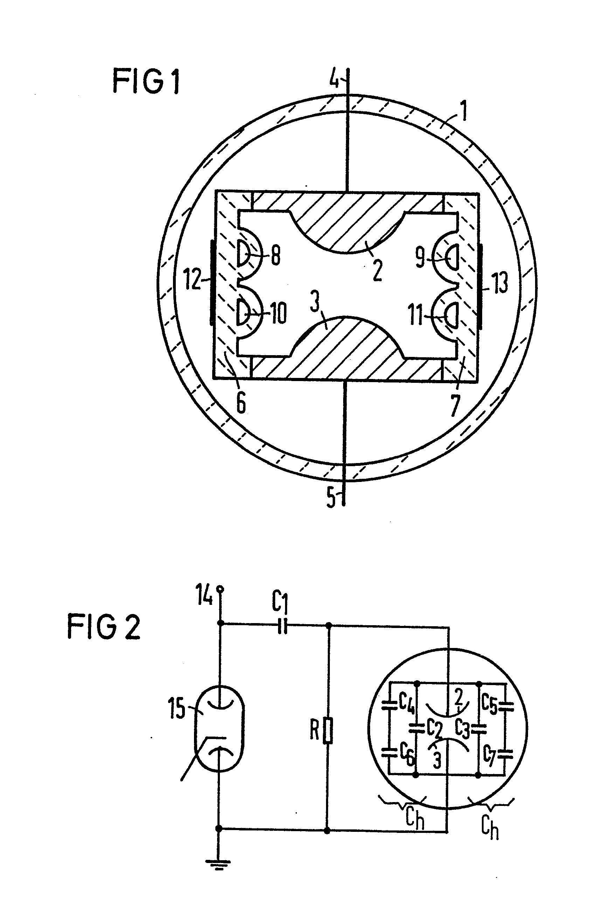

Der Laser der Fig. 1 ist ein gepulster TE-Gaslaser. Er
enthält ein zylindrisches Keramikrohr 1, in das eine
Elektrodenanordnung eingesetzt ist. Die gesamte Anordnung ist als eine selbsttragende Einheit ausgebildet und
hat die Form eines langgestreckten Quaders mit einem
rechteckigen Querschnitt. Zwei gegenüber liegende Längsseiten dieses Quaders werden im wesentlichen durch Hauptelektroden (Hauptkathode 2, Hauptanode 3) mit ihren jeweiligen Zuleitungen 4, 5 gebildet; in die beiden übriggen Quaderlängsseiten ist jeweils ein Hilfselektrodenpaar integriert. Die Stirnseiten des Quaders sind jeweils
durch eine als Spiegelträger fungierende, nicht dargestellte Platte abgeschlossen.

Jedes Hilfselektrodenpaar enthält einen gemeinsamen Keramikkörper 6, 7 mit dem Profil eines "B", von dem oben und
unten jeweils ein abgeknickter Steg ausgeht. Die Rückseite und die beiden Hohlräume der B-Form sind metallisiert
(Metallisierungen 8 bis 13), wobei die der Hauptkathode 2
benachbarte Metallisierungen 8, 9 als Hilfskathoden, die
der Hauptanode 3 benachbarten Metallisierungen 10, 11 als
Hilfsanoden und die außenseitigen Metallisierungen 12, 13
zur Erhöhung der Kapazitäten dienen. Die abgeknickten
Stege sind jeweils mit einer der Hauptelektroden verfestigt.

Fig. 2 zeigt eine besonders einfache Betriebsschaltung für den Laser der Fig. 1. Zwischen einem Hochspannungsanschluß 14 und Masse befindet sich eine triggerbare Funkenstrecke 15. Zu diesem Schalter liegt ein Reihenglied, gebildet aus einem Ladekondensator $C_1$ und einem ohmschen Widerstand R parallel. Quer zum Widerstand ist die Hauptentladungsstrecke geschaltet, deren Kathode mit den Hilfskathoden und deren Anode mit den Hilfsanoden verbunden sind. In der Figur sind die Hilfselektrodenpaare jeweils durch die von ihnen gebildeten Kapazitäten $C_h$ ersetzt: Die Kapazitäten $C_2$ und $C_3$ symbolisieren die Kondensatoren, die die Metallisierungen 8 und 10 bzw. 9 und 11 miteinander bilden, die Kapazitäten $C_4$ und $C_5$ die Kapazitäten aus den Metallisierungen 8 und 12 bzw. 9 und 13 und die Kapazitäten $C_6$ und $C_7$ die Kondensatoren der Metallisierungen 10 und 12 bzw. 11 und 13. *Aus den Kapazitäten $C_2, C_4, C_6$ bzw. $C_3, C_5, C_7$ ergibt sich jeweils eine Kapazität $C_h$.* Die Schaltung ist folgendermaßen ausgelegt: Der Hochspannungsanschluß empfängt eine Hochspannung von $26(\pm 3)$ kV, der Ladekondensator hat eine Kapazität von 10nF, der ohmsche Widerstand ist 10 kΩ groß und die Kapazität eines jeden Hilfselektrodenpaares beträgt etwa 40pF.

Weitere Herstellungs- und Betriebseinzelheiten gehen aus der Hauptanmeldung hervor.

Die Erfindung ist nicht auf das dargestellte Ausführungsbeispiel beschränkt. So könnte man dem Keramikkörper der Hilfselektroden noch andere Formen geben, sofern nur die vorgeschriebene Einschnürung auf der Innenseite bleibt; möglich wäre etwa, wenn dies die Platzverhältnisse erlauben, ein "8"-Profil, das besonders hohe Kapazitäten liefert. Davon abgesehen ließen sich die erfindungsgemäß gewonnenen Freiheiten bei der Parameterwahl auch dazu nutzen, eine Gasmischung mit besonders hoher Volumenausbeute zu wählen; realisierbar wäre beispielsweise ein $CO_2$-Laser mit einem $CO_2$-Gehalt von mindestens 30%.

6 Patentansprüche 2 Figuren

Patentansprüche

1. Transversal angeregter Gaslaser, insbesondere TEA-Laser, enthaltend

1) eine langgestreckte, gasgefüllte Entladungskammer mit

a) zwei optischen Elementen, die sich an den beiden Kammerstirnseiten befinden und auf einer gemeinsamen Achse (optische Achse) liegen,

b) zwei im Kammerinneren plazierten Elektroden (Hauptkathode, Hauptanode), die sich längs der optischen Achse erstrecken, und zwar derart, daß diese Achse in dem Raum (Hauptentladungsraum) zwischen der Hauptkathode und Hauptanode verläuft,

c) mindestens zwei weiteren, im Kammerinneren angeordneten Elektroden (Hilfselektroden), die sich im Bereich einer der beiden offenen Seiten des Hauptentladungsraumes parallel zur optischen Achse erstrecken, jeweils aus einem von einem gemeinsamen dielektrischen Mantel umgebenen Leiter bestehen und zu allen übrigen Elektroden einen Überschlagsabstand beinhalten;

2) eine Ansteuereinheit, mit der im Betrieb des Gaslasers

a) die Hauptkathode und die Hauptanode auf derart unterschiedliche Potentiale gelegt werden, daß zwischen ihnen eine elektrische Entladung (Hauptentladung) erfolgt;

b) je zwei ein Paar bildende Hilfselektroden auf derart voneinander verschiedene Potentiale gelegt werden, daß zwischen ihnen eine das Gas des Hauptentladungsraumes vorionisierende Koronaentladung stattfindet;

gemäß dem Hauptpatent (Patentanmeldung P 33 13 811.7);
d a d u r c h   g e k e n n z e i c h n e t,   daß der Mantel (6, 7) ein Profil mit einer Einschnürung zwischen den Leitern jedes Hilfselektrodenpaares (Metallisierungen 8, 10 bzw. 9, 11) auf der dem Hauptentladungsraum zugewandten Seite (Innenseite) aufweist.

2. Laser nach Anspruch 1, d a d u r c h   g e k e n n z eichnet, daß der Mantel (6, 7) eines Hilfselektrodenpaares ein "8"- oder "B"-Profil aufweist.

3. Laser nach Anspruch 1 oder 2, d a d u r c h   g e - k e n n z e i c h n e t,   daß der Hilfselektrodenleiter aus einer Metallisierung (8 bis 11) besteht, die vorzugsweise die gesamte Innenwand des Mantels (6, 7) bedeckt.

4. Laser nach Anspruch 1 oder 3, d a d u r c h   g e - k e n n z e i c h n e t,   daß die Außenseite des Mantels (6, 7) eine Metallisierung (12, 13) trägt.

5. Laser nach Anspruch 4, mit einem Ladekondensator der Kapazität $C_1$, d a d u r c h   g e k e n n z e i c h n e t, daß für die Kapazität $C_2$ des aus einem Hilfselektrodenpaar gebildeten Kondensators gilt:
$10^{-3} C_1 < C_2 < 10^{-2} C_1$, insbesondere $3 \times 10^{-3} C_1 < C_2 < 0,6 \times 10^{-2} C_1$.

6. Verfahren zum Betrieb eines Lasers gemäß einem der Ansprüche 1 bis 5, mit einem Schalter im Kreis einer Hochspannungsquelle, einem quer zum Schalter liegenden, aus einem Ladekondensator in Reihe mit einem ohmschen Widerstand gebildeten Glied, einer quer zum ohmschen Widerstand liegenden Hauptentladungsstrecke und mindestens zwei Hilfselektrodenpaaren, von denen jeweils die eine Elektrode mit der Hauptkathode und die andere Elektrode mit der Hauptanode verbunden ist,   d a d u r c h   g e k e n n z e i c h n e t,   daß der Hochspannungsanschluß eine Hochspannung U zwischen 20kV und 30kV erhält, daß die Kapazität des Ladekondensators $C_1$ zwischen 5nF und 15nF liegt, daß die Hilfselektrodenpaare jeweils eine Kapazität $C_h$ zwischen 30pF und 70pF haben und daß der Widerstandswert R des ohmschen Widerstandes zwischen 5kV und 15kV liegt, insbesondere daß gilt:
$23kV < U < 29kV$,   $8nF < C_1 < 12nF$,   $40pF < C_h < 60pF$, $8k\Omega < R < 12k\Omega$.

0178621

FIG 1

FIG 2